(19) Europäisches Patentamt
European Patent Office
Office européen des brevets

(11) **EP 1 412 814 B1**

(12) **FASCICULE DE BREVET EUROPEEN**

(45) Date de publication et mention
de la délivrance du brevet:
**03.03.2010 Bulletin 2010/09**

(51) Int Cl.:
***G02F 1/225*** *(2006.01)*

(21) Numéro de dépôt: **01996767.8**

(86) Numéro de dépôt international:
**PCT/FR2001/003590**

(22) Date de dépôt: **15.11.2001**

(87) Numéro de publication internationale:
**WO 2002/041073 (23.05.2002 Gazette 2002/21)**

(54) **MODULATEURS ELECTRO-OPTIQUES LARGE BANDE**

BREITBAND-ELEKTROOPTISCHE MODULATOREN

WIDE BAND ELECTRO-OPTICAL MODULATORS

(84) Etats contractants désignés:
**AT BE CH CY DE DK ES FI FR GB GR IE IT LI LU MC NL PT SE TR**

(30) Priorité: **16.11.2000 FR 0014804**

(43) Date de publication de la demande:
**28.04.2004 Bulletin 2004/18**

(73) Titulaire: **CENTRE NATIONAL DE LA RECHERCHE SCIENTIFIQUE (CNRS)
75794 Paris Cedex 16 (FR)**

(72) Inventeurs:
- **PORTE, Henri**
  **F-25770 SERRE les SAPINS (FR)**
- **HAUDEN, Jérôme**
  **F-25000 BESANCON (FR)**
- **MOLLIER, Pascal**
  **F-25000 BESANCON (FR)**

(74) Mandataire: **Michelet, Alain**
  **Cabinet Harlé et Phélip**
  **7, rue de Madrid**
  **75008 Paris (FR)**

(56) Documents cités:
- **KISHINO T ET AL: "70+ mu m deep domain inversion in X-cut LiNbO/sub 3/ and its use in a high-speed bandpass integrated-optic modulator" APPLIED PHYSICS LETTERS, 26 JUNE 2000, AIP, USA, vol. 76, no. 26, pages 3852-3854, XP000963351 ISSN: 0003-6951**
- **PATENT ABSTRACTS OF JAPAN vol. 2000, no. 12, 3 janvier 2001 (2001-01-03) & JP 2000 249994 A (FUJITSU LTD), 14 septembre 2000 (2000-09-14)**
- **SCHAFFNER J H ET AL: "VELOCITY-MATCHING IN MILLIMETER WAVE INTEGRATED OPTIC MODULATORS WITH PERIODIC ELECTRODES" JOURNAL OF LIGHTWAVE TECHNOLOGY,US, IEEE. NEW YORK, vol. 12, no. 3, 1 mars 1994 (1994-03-01), pages 503-511, XP000469804 ISSN: 0733-8724**
- **HUI K W ET AL: "ELECTRODE OPTIMIZATION FOR HIGH-SPEED TRAVELING-WAVE INTEGRATED OPTIC MODULATORS" JOURNAL OF LIGHTWAVE TECHNOLOGY,US,IEEE. NEW YORK, vol. 16, no. 2, 1 février 1998 (1998-02-01), pages 232-238, XP000750663 ISSN: 0733-8724**
- **SEMENOV A S ET AL: "COMPENSATION OF THE VELOCITY MISMATCH IN TRAVELING-WAVE MODULATORS UTILIZING A CUMULATIVE INTERACTION" SOVIET JOURNAL OF QUANTUM ELECTRONICS,US,AMERICAN INSTITUTE OF PHYSICS. WOODBURY, NY, vol. 22, no. 1, 1992, pages 73-78, XP000273648**
- **SAMSON S ET AL: "Electro-optic measurements using a Mach-Zehnder interferometer with domain reversals" PHOTONIC COMPONENT ENGINEERING AND APPLICATIONS, ORLANDO, FL, USA, 8-9 APRIL 1996, vol. 2749, pages 186-194, XP001016441 Proceedings of the SPIE - The International Society for Optical Engineering, 1996, SPIE-Int. Soc. Opt. Eng, USA ISSN: 0277-786X**

EP 1 412 814 B1

**Description**

La présente invention concerne le domaine des composants optoélectroniques intégrés applicables notamment dans le domaine des télécommunications optiques.

Cette invention concerne plus particulièrement un modulateur électro-optique de lumière réalisable en particulier dans le niobate de lithium. Sa configuration fait appel à une structure en cascade de deux jeux d'électrodes alignés parallèlement à une structure de guide d'onde formant un interféromètre à deux bras par exemple, de Mach-Zehnder. Un premier jeu est déposé sur une partie de cristal dont le domaine ferroélectrique est orienté avec une polarisation positive (ou négative), le deuxième jeu d'électrodes étant sur l'autre moitié du cristal présentant un domaine de polarisation ferroélectrique inversée négative (ou positive).

Le document SAMSON S. et Al. ("Electro-optic measurements using a Mach-Zehnder interferometer with domains reversals" PHOTONICS COMPONENT ENGINEERING AND APPLICATIONS, ORLANDO, FL, USA, 8-9 April 1996, vol. 2749, pages 186-194, Proceedings of the SPIE - The International Society for Optical Engineering), divulgue (figure 6) un modulateur optique comportant une structure en guide d'onde constituant un interféromètre à deux ondes formé dans un matériau électro-optique, et comportant deux bras, deux ensembles d'électrodes placés l'un dans une région non inversée du matériau électro-optique, l'autre dans une région inversée.

Les évolutions récentes des transmissions par fibre optique font appel à des débits d'information par canal de plus en plus élevés, de l'ordre de 40 Gbit/s. Chaque canal étant dans ce cas un canal de longueur d'onde des lasers d'émission. On parle de multiplexage en longueur d'onde. L'intervalle spectral entre canaux, la stabilité de la fréquence d'émission ainsi que la finesse spectral des lasers semi-conducteurs utilisés, imposent de faire appel à des modulateurs optiques externes à la source optique pour greffer l'information sur le canal.

Les modulateurs optiques réalisés à partir de cristaux électro-optiques de niobate de lithium permettent d'assurer cette fonction de modulation externe. Ils font l'objet d'une industrialisation basée sur une technologie éprouvée. Cependant, leur mise en oeuvre à des débits aussi élevés que 40 Gb/s impose qu'un certain nombre de problèmes soient simultanément résolus. Ces problèmes sont notamment ceux de la platitude de la réponse en fréquence du modulateur, sa consommation électrique qui croît fortement avec la fréquence de modulation. On recherche de plus, en même temps qu'une réponse étendue en fréquence, des tensions de commande faibles, celles-ci étant limitées par l'électronique de commande. Enfin, à des débits aussi élevés que 40 Gb/s, des problèmes de dispersion se posent, bien que faibles si on compare la modulation externe de la lumière - par un modulateur - à la modulation directe d'un laser à semi-conducteur. Ces problèmes de dispersion, avec les modulateurs externes, par exemple en niobate de lithium, sont liés au rapport entre la modulation de phase résiduelle et la modulation d'intensité générée. Ce rapport est appelé " chirp ".

La configuration classique d'un modulateur optique intégré de ce type sur niobate de lithium fait appel à un certain nombre de principes :

Le premier principe repose sur le fait que le cristal de niobate de lithium, le plus souvent employé, est électro-optique, ce qui signifie que l'application d'un champ électrique externe appliqué sur les faces convenablement orientées du cristal, écartées d'une distance donnée, se traduit par une variation de l'indice de réfraction du matériau et, par conséquent, par une variation de phase linéaire de l'onde optique le traversant sur une longueur donnée. Ce fonctionnement impose que le champ électrique de la lumière possède une direction de polarisation privilégiée, parallèle ou perpendiculaire au champ électrique statique appliqué. Un montage interférométrique permet alors de convertir cette variation de phase en modulation d'intensité détectable par un photodétecteur.

Le deuxième principe repose sur le fait que, dans un tel matériau, le dopage par des ions métalliques ou par des protons permet d'accroître l'indice de réfraction de manière locale, sous forme par exemple d'un ruban étroit, de telle sorte que de la lumière puisse être injectée dans le micro-canal provoqué par cet accroissement d'indice, et puisse se propager par réflexions totales internes successives sans diverger dans le guide d'onde optique ainsi réalisé. Il est alors possible de réaliser une circuiterie optique complexe sur laquelle la réalisation d'électrodes, le long du guide dont la largeur typique est de l'ordre de 10 $\mu$m, permet d'appliquer un champ électrique très élevé avec une tension électrique de commande faible (5 V), compatible avec ce qui est requis dans les systèmes électroniques pour télécommunications.

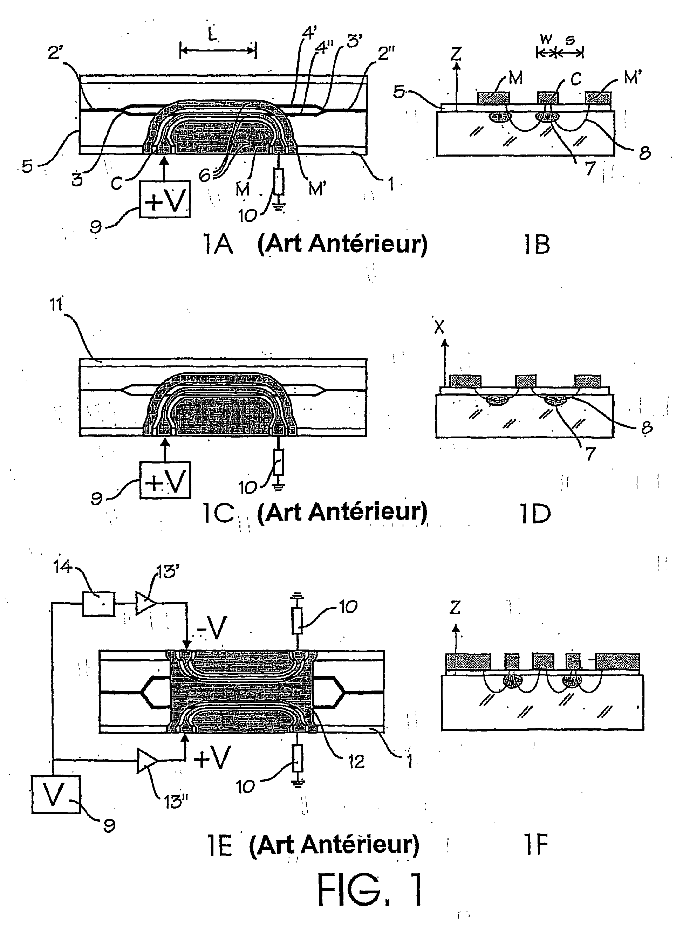

Une structure appelée interféromètre de Mach-Zehnder décrite par la figure 1A, en vue de dessus et en vue de coupe sur la figure 1B, permet l'intégration d'un modulateur complet. Le circuit optique, comprenant des sections de guides optiques est intégré sur un substrat 1 de niobate de lithium, de coupe Z. Il est constitué, dans ce cas, d'une section de guide rectiligne 2' pour l'insertion de la lumière, de longueur d'onde, dans le vide $\lambda$, suivi d'un embranchement 3 en forme de Y, qui sépare la lumière propagée vers deux autres sections 4' et 4" rectilignes et parallèles qui forment chacun des bras de l'interféromètre. Après une longueur de propagation L, les deux bras sont recombinés par une deuxième jonction 3' en forme de Y terminée par un dernier tronçon 2" recombinant les ondes et acheminant la lumière vers la sortie du dispositif. L'écart de phase créé entre les bras par le champ électrique se traduit, par phénomène d'interférence, une modulation d'intensité de la lumière transmise.

Un mode possible de réalisation de la structure de guides optiques consiste à déposer à la surface du substrat cristallin une épaisseur de titane, d'épaisseur prédéterminée, par des techniques d'évaporation sous vide de couches minces. Dans cette couche de titane, le motif des guides est défini avec l'aide des techniques classiques de photolithographie puis est diffusé à haute température pendant une durée fixée. Pendant la diffusion thermique, les ions métalliques pénètrent dans le cristal et le dopage résultant se traduit par une augmentation locale de l'indice de réfraction selon un profil en amplitude, en profondeur et largeur qui peut être calculé et mesuré. Le champ lumineux qui se propage possède une étendue spatiale qui suit sensiblement le profil d'indice.

Le fonctionnement du modulateur fait appel par ailleurs à une couche mince 5 d'un matériau diélectrique parfaitement isolant, tel que par exemple de la silice d'épaisseur e donnée. Par ailleurs, des électrodes 6 sont déposées par des techniques de report photolithographique à la surface du dispositif. Une solution possible pour réaliser cette structure d'électrodes consiste à disposer une ligne conductrice C parallèlement à l'un des bras 4' de l'interféromètre. Dans le cas d'un substrat supportant le circuit optique de type interféromètre de Mach-Zehnder, dont la surface principale, dans la configuration la plus favorable pour réaliser un modulateur de très large bande passante électrique, est coupée perpendiculairement à l'axe principal Z (ou c) du cristal de niobate de lithium considéré, l'électrode conductrice sera, par exemple, disposée au-dessus du bras 4". De chaque côté de cette ligne centrale de largeur w, sont alors disposés à une distance s deux plans de masse, comme cela est montré sur la figure 1B. Lorsque la distance s est de l'ordre d'une quinzaine de micromètres, un champ électrique très élevé peut être appliqué entre le conducteur principal C et les plans de masse symétriques M et M'.

Une solution possible généralement utilisée pour augmenter l'efficacité de la modulation de phase consiste à placer l'un des plans de masse juste au-dessus du deuxième bras 4, tel que cela est représenté sur les figures 1A et 1B. Dans ce cas, les guides 4 et 4' subissent l'influence de champs électriques de signes opposés les traversant. La variation de phase relative introduite par l'effet électro-optique peut être améliorée d'un facteur deux environ par cette configuration.

Sur ce point précis, intervient un paramètre qui est déterminant dans l'amplitude de " chirp " générée par le modulateur. En effet, la tension demi-onde $V_\pi$ résultante est inversement proportionnelle à la longueur d'interaction L, au coefficient électro-optique $r_{33}$ considéré du matériau, au cube de l'indice de réfraction extraordinaire $n_e$ du matériau vu par la lumière se propageant dans le matériau et est proportionnelle à l'écart s entre les électrodes à la longueur d'onde de la lumière. La tension demi-onde est donc d'autant plus faible que les électrodes sont longues et rapprochées. D'autre part, cette tension demi-onde est pondérée par l'inverse d'un coefficient η dit de recouvrement, dont la valeur est comprise entre 0 et 1, et qui traduit l'efficacité d'interaction entre le champ électrique lumineux 7 et le champ électrique statique 8, chacun étant inhomogène par ailleurs. Comme le montre la figure 1B, la répartition de champ électrique 8 n'est pas la même sous l'électrode centrale C et sous le bord des plans de masse latéraux M et M'. Donc, on obtient pour le guide situé sous l'électrode centrale un recouvrement $\eta_1$ différent de celui $\eta_2$ obtenu par le guide situé sous une des électrodes latérales de masse. Par conséquent, l'application d'une tension aux bornes des électrodes entraîne des variations de phase de signes différents et d'amplitudes différentes dans chacun des bras. Après recombinaison, les ondes interfèrent et sont modulées en intensité. L'excès de modulation d'un bras par rapport à l'autre est converti en modulation de phase pure. Si un signal harmonique de pulsation Ω est appliqué, au moyen d'une source de signal 9, aux électrodes reliées à une impédance de terminaison adaptée 10, il se traduit par une modulation d'amplitude mais également par une modulation de phase résiduelle qui entraîne une modulation instantanée de la fréquence de la porteuse optique. C'est ce qu'on appelle le « chirp » en fréquence qui se traduit par un élargissement du spectre de la source lumineuse. Ceci peut être préjudiciable à la qualité d'une transmission dans un milieu dispersif et se traduire par une dégradation de la forme du signal qui entraîne des pénalités à la réception d'un signal numérique.

Dans certaines occasions, on cherchera néanmoins à pouvoir contrôler l'amplitude de cet élargissement spectral, et surtout son signe, de manière à pouvoir réaliser de la compression d'impulsions si le signe de la dispersion du milieu de propagation s'y prête.

Pour pouvoir s'affranchir du « chirp » en fréquence, la meilleure solution consiste généralement à parfaitement équilibrer les taux de recouvrement η dans chacun des bras. Le moyen d'y parvenir nécessite de travailler avec une coupe de cristal différente de Z. La coupe X permet de réaliser une structure dans laquelle les deux guides sont situés de part et d'autre de l'électrode centrale, au milieu de la région la séparant de chaque électrode latérale. La figure 1C montre une solution possible pour réaliser cette structure sur un substrat 11 de coupe X, en vue de dessus. Le champ appliqué traversant les guides est horizontal et la structure symétrique fait que les recouvrements sont identiques dans chacun des bras. La figure 1D montre, en vue transverse, la répartition des lignes de champ 8 et la position des champs lumineux 7 transmis par les guides par rapport aux électrodes. Cependant, il est possible de montrer que la réponse en fréquence d'un modulateur en coupe X est moins favorable que celle d'un modulateur en coupe Z.

Une solution pour s'affranchir ou contrôler le " chirp " en fréquence sur des cristaux de niobate de lithium en coupe Z, consiste à réaliser deux jeux d'électrodes symétriques 12 avec un conducteur central sur chacun des bras, de manière à rendre symétrique la structure. Dans ce cas, on dispose d'une source de signal 9. La source de signal 9 est reliée à deux électroniques d'amplification de commande 13' et 13" pour chacun des bras. De plus, une bascule électronique 14 doit être rajoutée sur une des entrées pour inverser la polarité du champ électrique appliqué. La figure 1E montre un exemple de réalisation en vue de dessus. La Figure 1F représente la position des guides par rapport aux électrodes en vue transverse.

En ce qui concerne la réponse en fréquence des électrodes, celle-ci est liée à l'impédance caractéristique de la ligne $Z_c$, la vitesse de propagation du signal micro-onde dans la ligne liée à l'indice micro-onde $n_m$, à l'atténuation de la ligne $\alpha$. L'impédance caractéristique $Z_c$ et l'indice micro-onde $n_m$ sont liés aux paramètres géométriques de la ligne que sont la largeur du conducteur central, l'écartement des plans de masse, l'épaisseur des électrodes, l'épaisseur de la couche diélectrique. L'objectif est de parvenir à un indice micro-onde $n_m$ qui soit égal à l'indice de réfraction optique $n_o$, de manière à adapter les vitesses optiques et micro-ondes, de telle sorte que la variation de phase optique par effet électro-optique se cumule tout le long de l'interaction. L'autre objectif concerne l'impédance caractéristique qui doit être aussi proche que possible de l'impédance de sortie de la source du signal micro-onde et de l'impédance de charge 10 placée en sortie de la ligne. Une ligne parfaitement adaptée permet en effet de s'assurer que l'onde qui se propage, ne subit pas de réflexion pouvant dégrader la qualité du signal modulé.

Lorsque les électrodes sont conçues de telle façon que l'impédance caractéristique $Z_c$ soit adaptée et que l'indice micro-onde $n_m$ soit égal à l'indice optique $n_e$, alors le seul élément limitatif à la réponse en fréquence est la perte de propagation $\alpha$ dans les électrodes. La perte de propagation en puissance électrique le long de la ligne, exprimée en décibel, est proportionnelle à la longueur de la ligne et à la racine carrée de la fréquence de modulation. On exprime généralement cette perte selon $\alpha$ (f, L) = $\alpha_o f^{1/2} L$. $\alpha_o$ s'exprime en dB/cm/GHz$^{1/2}$. Ainsi, à titre d'exemple, si $\alpha_o$ est égal à -0,47 dB/cm/GHz$^{1/2}$, alors pour 2 cm d'électrodes, la bande passant à 40 GHz est de -6 dB. Si pour 2 cm d'électrodes, la tension demi-onde est typiquement de 6 Volts, pour 1 cm d'électrodes, correspondant à -3 dB de bande passante à 40 GHz, la tension demi-onde sera de 12 Volts, ce qui représente une puissance dissipée quatre fois plus importante. De plus, il est très difficile de concevoir et réaliser une électronique de commande de 40 GHz de bande passant capable de délivrer des tensions pic à pic de 12 V.

Le but de l'invention est donc de proposer un modulateur optique ayant une bonne réponse en fréquence et qui s'affranchisse du phénomène de « chirp ».

A cet effet, l'invention concerne un modulateur optique comportant :

- une structure en guide d'onde constituant un interféromètre à deux ondes formé dans un matériau électro-optique, et comportant deux bras,
- deux jeux d'électrodes dont un premier ensemble d'électrodes relié à une source électrique commandable permettant l'application d'un champ électrique sur l'un au moins des bras de l'interféromètre, de manière à faire varier l'écart de phase entre des ondes lumineuses suivant respectivement l'un ou l'autre des bras, et un deuxième ensemble d'électrodes, l'un des ensembles d'électrodes, étant placé dans une région non inversée du matériau électro-optique, l'autre dans une région inversée.

Selon un premier mode de réalisation de l'invention :

- lesdits premier et deuxième ensembles d'électrodes sont placés respectivement sur chacun des bras de l'interféromètre ; et
- une ligne à retard est placée entre les électroniques de commande des ensembles d'électrodes introduisant un retard égal au temps de propagation de la lumière à travers la section de l'interféromètre à deux ondes recouverte par le premier ensemble d'électrodes.

L'invention concerne également un autre modulateur optique comportant :

- une structure en guide d'onde constituant un interféromètre à deux ondes formé dans un matériau électro-optique, et comportant deux bras ;
- deux jeux d'électrodes dont un premier ensemble d'électrodes relié à une source électrique commandable permettant l'application d'un champ électrique sur l'un au moins des bras de l'interféromètre, de manière à faire varier l'écart de phase entre des ondes lumineuses suivant respectivement l'un ou l'autre des bras, et un deuxième ensemble d'électrodes, l'un des ensembles d'électrodes, étant placé dans une région non inversée du matériau électro-optique, l'autre dans une région inversée.

Selon un deuxième mode de réalisation de l'invention:

- lesdits premier et deuxième ensembles d'électrodes sont placés respectivement sur chacun des bras de l'interféromètre ; et

- lesdits premier et deuxième ensembles d'électrodes sont regroupés et constitués par deux électrodes parallèles l'une à l'autre et comportant un nombre pair de sections parallèles raccordées par un tronçon en forme de S, chaque section traversant une région de polarité ferroélectrique de signe opposé à celle de la section adjacente.
- le substrat est un cristal anisotrope de niobate de lithium de coupe z perpendiculaire à la surface ;
- le substrat est un cristal anisotrope de tantalate de lithium de coupe Z perpendiculaire à la surface ;
- la structure en guide d'onde est réalisée par diffusion thermique de couches minces métalliques;
- la structure en guide d'onde est réalisée par échange protonique ;
- les ensembles d'électrodes sont chacun refermés sur une impédance de charge ;
- les ensembles d'électrodes sont regroupés et constitués par deux électrodes parallèles l'une à l'autre et constituées chacune de deux sections raccordées par un tronçon en forme de S ;
- la région inversée du matériau électro-optique est obtenue de manière permanente par l'application locale d'une impulsion brève d'un champ électrique intense ;
- la région inversée du matériau électro-optique est obtenue par bombardement électronique ;
- la région inversée du matériau électro-optique couvre les deux bras de l'interféromètre sur une longueur au moins égale à celle de l'un des ensembles d'électrodes et couvre ces bras sur une largeur au moins égale à celle du champ lumineux ;
- l'interféromètre est un interféromètre de Mach-Zehnder ;
- chaque ensemble d'électrodes comporte un conducteur central à faible perte centré respectivement sur chaque bras de l'interféromètre ;
- chaque ensemble d'électrodes comporte deux plans de masse latéraux symétriques disposés à une distance au moins égale à deux fois la largeur du conducteur central ;
- la source électrique commandable comporte deux amplificateurs de commande à gain variable permettant le contrôle des tensions électriques, respectivement appliquées aux électrodes par rapport à la moitié de la tension demi-onde résultant d'un jeu unique d'électrodes, de façon à régler la modulation de phase résiduelle ;
- la ligne à retard est passive ;
- la ligne à retard est active.

Ainsi, l'amélioration des performances des modulateurs optiques large bande intégrée sur niobate de lithium selon l'invention est obtenue en agissant sur les points suivants :

• inversion de domaine ferroélectrique sur une partie du chemin optique des bras de l'interféromètre,
• réalisation d'une structure d'interféromètre de Mach-Zehnder en onde guidée sur niobate de lithium en coupe Z,
• réalisation d'un jeu d'électrodes à ondes progressives sur la partie des bras de l'interféromètre n'ayant pas subi d'inversion de domaine ferroélectrique, le conducteur central du jeu d'électrode étant positionné au-dessus d'un des bras de l'interféromètre,
• réalisation d'un jeu d'électrodes à ondes progressives sur la partie des bras de l'interféromètre ayant subi l'inversion de domaine ferroélectrique, le conducteur central du jeu d'électrodes étant positionné au-dessus de l'autre bras de l'interféromètre,
• utilisation de deux électroniques de commande distinctes délivrant chacune une tension pic à pic égale à la tension demi-onde $V_{\pi}$, celle-ci correspondant à une longueur d'interaction égalant la somme de la longueur individuelle de chacun des jeux d'électrodes,
• chaque électronique de commande, alimentée par le signal source micro-onde, pilote l'un des jeux d'électrodes, une ligne à retard est disposée entre chaque électronique de commande, de manière à ce que l'application du signal sur l'électronique aval soit synchrone avec l'électronique amont, compte tenu de la vitesse de propagation de l'onde optique dans le guide et de la durée d'interaction dans l'électrode amont. L'invention sera décrite ci-avant en détail par rapport aux dessins annexés dans lesquels :

- les figures 1A et 1B représentent une structure antérieure décrite plus haut ;
- les figures 1C et 1D représentent une structure antérieure en coupe X décrite plus haut ;
- les figures 1E et 1F représentent une structure antérieure en coupe Z également décrite plus haut ;
- les figures 2A, 2B, 2C représentent un premier mode de réalisation de l'invention, la figure 2C étant une vue de dessus et les figures 2A et 2B, des vues en coupe, respectivement selon les lignes $c_1$ et $c_2$ ;
- la figure 3 est une vue de dessus d'un deuxième mode de réalisation de l'invention ;
- la figure 4 est une représentation comparée des performances selon l'invention par rapport à l'art antérieur en coupe Z,

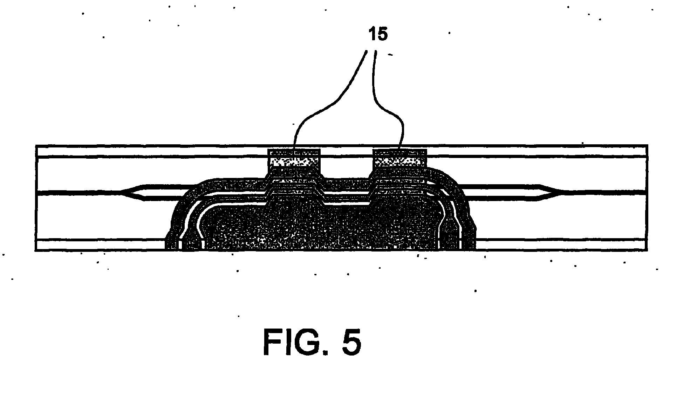

- la figure 5 est une vue de dessus d'une variante de réalisation de l'invention.

Le composant est réalisé sur un substrat 1 de niobate de lithium ferroélectrique, de coupe Z, l'axe Z étant, par exemple, orienté de manière positive par rapport à la surface principale du cristal. On parle d'orientation Z⁺. Le substrat supporte un motif de guide d'onde de type interféromètre de Mach-Zehnder. Ce motif comporte un guide rectiligne d'entrée 2' et de sortie 2", deux jonctions Y, 3' et 3", reliées par chacun des bras 4' et 4" de l'interféromètre. Les guides d'ondes sont réalisés par exemple par diffusion de titane, ou bien également par le procédé d'échangé lithium/protons.

Le cristal de niobate de lithium comporte dans toute son épaisseur une région 15 qui a subi une inversion de domaine ferroélectrique. Cela signifie que, par application brève et localisée d'un champ électrique entre les deux faces du cristal, de l'ordre de 20 kV/mm pendant une durée brève, la polarisation spontanée du cristal change de direction de manière permanente. Le cristal subit ainsi localement une inversion de sa polarité d'où l'appellation d'inversion de domaine ferroélectrique. La direction de l'axe Z est inversée. En surface, la région 15 est dite d'orientation Z⁻. La conséquence principale de ce changement d'orientation, en ce qui concerne le modulateur, est que le signe du coefficient électro-optique $r_{33}$ impliqué dans la modulation est inversé. Cela signifie que, dans la région dite inversée, l'application d'une tension électrique positive entraîne une variation d'indice de réfraction optique de signe opposé à celle obtenue dans la région dite non inversée.

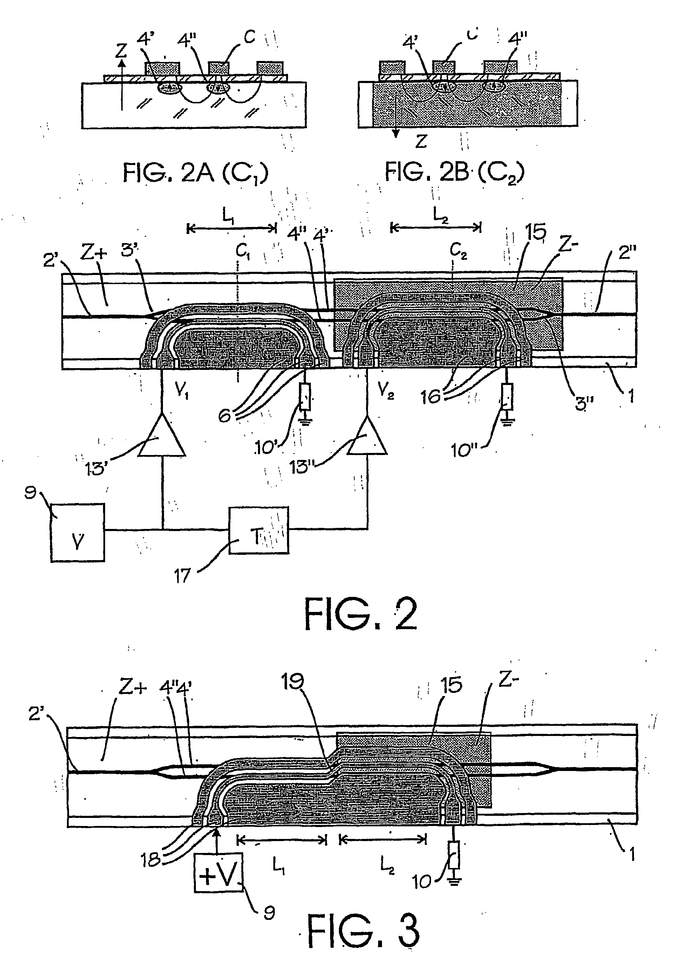

Dans la région dite non inversée, comme cela est montré sur la figure 2A correspondant à une vue en coupe transverse selon C1, un jeu d'électrodes 6, de longueur $L_1$, est positionné avec l'électrode centrale alignée au-dessus du bras 4" de l'interféromètre. La variation d'indice dans ce bras est, par exemple positive, avec un recouvrement entre le champ électrique et le champ lumineux $\eta_1$. L'autre bras 4' est situé sous l'une des électrodes de masse et subit une variation d'indice négative avec un taux de recouvrement $\eta_2$.

Dans la région 15 dite inversée, comme cela est montré sur la figure 2B correspondant à une vue en coupe transversale selon C2, un deuxième jeu d'électrodes 16, de longueur $L_2$, est positionné avec l'électrode centrale alignée cette fois au-dessus du bras 4' de l'interféromètre. Une tension électrique $V_2$, de même signe que $V_1$, est appliquée aux bornes des électrodes 16. La variation d'indice dans ce bras est cette fois négative du fait de l'inversion du signe de $r_{33}$. Le taux de recouvrement est maintenant $\eta_1$. L'autre bras 4" situé sous l'une des électrodes latérales subit une variation d'indice positive, avec un taux de recouvrement de $\eta_2$, pour des raisons de symétrie.

Une autre possibilité est décrite par la figure 3. Dans ce cas, un seul jeu d'électrodes 18 est mis en jeu, de longueur totale $2L_1$. Ces électrodes sont divisées en deux sections. La première section correspond à un positionnement au-dessus de la zone dite non inversée, avec le conducteur central positionné au-dessus du bras 4" puis une deuxième section reliée à la première par un tronçon d'adaptation 19 en forme de S, qui fait passer le conducteur central du bras 4" au bras 4', dans la région du cristal dite inversée. Dans ce cas, une seule source de tension est nécessaire. On verra par la suite que, dans le cas de cette architecture, la réponse en fréquence est moins favorable mais la puissance de commande nécessaire est moins importante. Par contre, on montre dans ce qui suit que le " chirp " en fréquence peut être annulé.

Dans l'un ou l'autre de ces modes de réalisation, par référence à la structure générale de la figure 2, la phase cumulée dans le bras 4' pour une longueur d'interaction de $L_1$ puis $L_2$ est proportionnelle à $+\eta_1V_1L_1+\eta_2V_2L_2$. Dans le bras 4" pour une longueur d'interaction de $L_1$ puis $L_2$ la phase cumulée est proportionnelle à $-\eta_2V_1L_1-\eta_1V_2L_2$.

La modulation d'intensité, après recombinaison entre les ondes, dépend du cosinus au carré de la différence entre les phases cumulées dans chacun des bras, c'est-à-dire :

$$S = S_o \cos^2\left[\frac{2\pi}{\lambda s}n_e^3 r_{33}(\eta_1 V_1 L_1 + \eta_2 V_2 L_2 + \eta_2 V_2 L_1 + \eta_1 V_2 L_2)\right]$$

$S_o$ est proportionnel à la puissance optique incidente dans le composant.

La modulation de phase résiduelle associée au signal transmis par le composant, et qui se traduit par le " chirp " en fréquence optique, dépend de la somme des phases cumulées dans chacun des bras, c'est-à-dire :

$$\phi(V_1, V_2) = \frac{2\pi}{\lambda s}n_e^3 r_{33}(\eta_1 V_1 L_1 + \eta_2 V_2 L_2 - \eta_2 V_2 L_1 - \eta_1 V_2 L_2)$$

On constate que, dans le cas simple, correspondant notamment à la situation présentée sur la figure 3, pour

lequel $L_1=L_2$ et $V_1=V_2$, la variation de phase résiduelle est nulle. Le fonctionnement s'affranchit du déséquilibre entre les taux de recouvrement champ électrique/champ lumineux de chaque bras, rencontrés généralement avec les composants en coupe Z ne possédant qu'un jeu d'électrodes avec conducteur central rectiligne aligné sur un seul bras de l'interféromètre. De cette manière, on obtient un dispositif sans " chirp ". Inversement, en jouant, comme cela est possible avec la structure présentée figure 2, sur un rapport entre $V_1$ et $V_2$, il est possible d'obtenir un " chirp " réglable, selon l'application visée.

L'ajustement des tensions $V_1$ et $V_2$ peut se faire en jouant sur le gain des amplificateurs de commande 13' et 13" pilotés par la source de signal 9. La description statique qui vient d'être faite ne tient pas compte du comportement dynamique du dispositif généralement modulé par un signal dépendant du temps et couvrant une bande de fréquence de l'ordre de 40 GHz. Dans ces conditions, les temps de propagation des ondes électriques et optiques ne peuvent être négligés et notamment, comme indiqué précédemment, les vitesses des ondes optiques et micro-ondes doivent être adaptées. Pour que le signal se cumule le long des deux jeux d'électrodes, il est nécessaire que la modulation appliquée par le deuxième jeu d'électrodes, en supposant que la lumière se propage depuis le guide 2' vers le guide de sortie 2", soit synchrone avec la modulation qui se propage dans le premier jeu d'électrodes, ceci de façon à ce qu'il n'y ait pas de retard de phase pouvant dégrader l'efficacité de modulation. Pour cela une ligne à retard 17 est insérée entre les électroniques 13' et 13". Le retard introduit correspond exactement au temps de transit de la lumière à travers la section d'électrode 6 de longueur $L_1$. Pour le dispositif de la figure 3, cette ligne à retard n'intervient pas puisqu'une seule source de signal est utilisée avec un jeu unique d'électrodes 18.

Pour déterminer la réponse en fréquence sur la phase, on se place dans l'hypothèse où les impédances caractéristiques sont adaptées de manière à ce que l'onde hyperfréquence se propageant dans les électrodes soit une onde progressive, et on suppose que les vitesses optiques et micro-ondes sont adaptées. Le principal facteur limitatif est, dans ce cas, la perte en tension le long des électrodes par dissipation de l'énergie dans le conducteur dont la profondeur de peau diminue avec la fréquence. Le long de chaque ligne, on considère ainsi une distribution en amplitude de tension électrique en fonction de la distance x parcourue de la forme :

$$V(x) = V_0 \exp(-\gamma\sqrt{\Omega}x)$$

$V_0$ est l'amplitude de la tension appliquée à l'entrée des électrodes. On peut alors montrer que, pour des pertes faibles, la réponse sur la différence de phase après interaction avec les deux jeux d'électrodes, en grenant $V_1=V_2=V_0$ et $L_1=L_2+L$, est donnée de manière approchée par :

$$\Phi_1 - \Phi_2 = \frac{2\pi}{\lambda s}n_e^3 r_{33}(\eta_1+\eta_2)2V_0 L \exp\left(-\gamma\sqrt{\Omega}\frac{L}{2}\right)$$

A titre de comparaison, un modulateur tel que décrit par la figure 1A, commandé par une unique tension d'entrée $V_0$, pour un jeu d'électrode de longueur totale 2L, a une réponse en phase égale à :

$$\Phi_1 - \Phi_2 = \frac{2\pi}{\lambda s}n_e^3 r_{33}(\eta_1+\eta_2)2V_0 L \exp\left(-\gamma\sqrt{\Omega}L\right)$$

On constate que la tension nécessaire $V_0$ pour obtenir un déphasage de $\pi$ radians est la même dans chacun des cas, mais l'atténuation en fréquence est moins importante dans le premier cas. Celui-ci requiert deux électroniques de commande 13' et 13" pour alimenter chacun des jeux des électrodes, ce qui représente une puissance électrique dissipée deux fois plus importante. Cependant, on peut obtenir la même réponse en fréquence avec un seul jeu d'électrodes et une seule électronique de commande en divisant par deux la longueur des électrodes. Dans ce cas, la tension de commande nécessaire pour obtenir le même déphasage sera égale à $2V_0$. Dans ce cas, la consommation en puissance sera deux fois plus importante. Par ailleurs, une électronique de commande, fournissant comme dans ce dernier cas des tensions élevées sur des bandes passantes étendues, n'est pas aisément disponible actuellement à un prix compétitif.

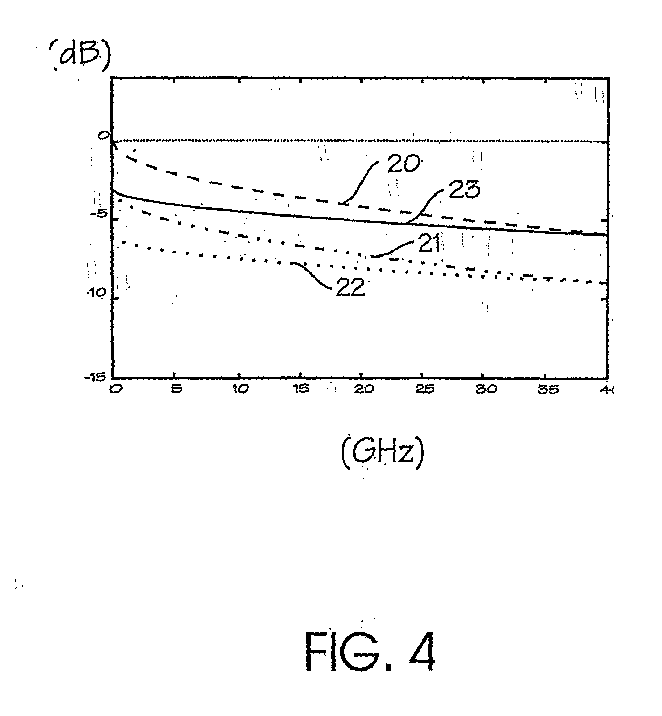

La figure 4 permet de comparer la réponse en puissance électrique du signal optique détecté selon l'invention, par rapport à l'art antérieur, pour des cristaux taillés selon une coupe Z. Elle donne en décibel la réponse en fonction de la fréquence correspondant à chaque situation. Ces courbes sont obtenues en supposant des caractéristiques d'électrodes identiques (largeur du conducteur central, écartement au plan de masse, épaisseur des électrodes, épaisseur de la couche électrique). Sont modifiées entre chaque courbe la ou les tensions de commande choisies de telle sorte que la puissance électrique consommée soit la même dans chacun des cas. Sont également modifiées selon les courbes: la longueur, le nombre d'électrodes mises en jeu, soit en série, soit en parallèle.

La courbe 20 donne le cas de d'un jeu d'électrodes unique de longueur 2L, commandé par une tension pis à pic $V_o$ égale à la tension demi-onde $V\pi$. La référence à 0 Hz est située à 0 dB. A 40 GHz, la perte en signal est de -6 dB. De plus, le signal est affecté par un " chirp " en fréquence optique du fait de la différence des taux de recouvrement champs électrique/champ lumineux $\eta_1$ et $\eta_2$ correspondant à chaque bras.

La courbe 21 donne le cas , de deux jeux d'électrodes en parallèles, de longueur 2L, commandé par une tension $+V_o/\sqrt{2}$ pour une électrode et $V_o/\sqrt{2}$ pour l'autre électrode. La puissance électrique consommée est la même que dans le cas précédent. La référence à 0 Hz est située à -3 dB. La puissance nécessaire à mettre en oeuvre avec deux sources de tensions est deux fois plus importante que dans le premier cas pour retrouver le même niveau de modulation. A 40 GHz, la perte en signal est de -6 dB, comme précédemment, les électrodes étant de même longueur. Par contre, la réponse n'est pas affectée par un « chirp » en fréquence optique, car les recouvrements $\eta$ sont identiques pour chacun des bras. Cependant, une bascule électronique est nécessaire pour inverser les signaux entre les deux entrées.

La courbe 22 donne le cas d'un jeu unique d'électrodes de longueur L, commandé par un signal de tension pic à pic égal à $V_o$, c'est-à-dire la moitié de la tension demi-onde $V\pi$ nécessaire dans ce cas. La référence à 0 Hz est située à -6 dB, car la consommation est quatre fois plus importante pour retrouver le même niveau de modulation que dans le premier cas. A 40 GHz, cette fois, la perte en signal n'est que de -3 dB. Par contre, la réponse est affectée par un « chirp » en fréquence optique.

Enfin, la courbe 23 donne le résultat faisant l'objet de la présente invention. Elle correspond au cas de deux jeux d'électrodes de longueur L chacun soit une longueur totale d'interaction 2L. Chaque jeu est commandé par une tension $V_o/\sqrt{2}$. L'un des jeux d'électrodes est positionné au-dessus d'une région dite non inversée, l'autre jeu étant positionné sur une région du cristal dite inversée. De plus, le conducteur central du deuxième jeu est aligné au-dessus d'un bras de l'interféromètre de Mach-Zehnder différent de celui utilisé pour le premier jeu d'électrodes. La référence à 0 Hz est située à -3 dB. Dans ce cas également, la puissance nécessaire à mettre en oeuvre avec deux sources de tensions est deux fois plus importante que dans le premier cas pour retrouver le même niveau de modulation. A 40 GHz, cette fois, la perte en signal n'est que de - 3 dB, la réponse est donc plus plate. De plus, dans ce cas, la réponse n'est pas affectée par un « chirp » en fréquence optique, du fait de l'égalisation de la valeur moyenne du recouvrement le long de chaque bras entre les deux jeux d'électrodes. Cette solution constitue un bon compromis par rapport aux autres solutions rapportées précédemment, entre les exigences de faible consommation électrique, de platitude de la réponse en fréquence, de faible modulation de phase résiduelle associée (chirp).

Un dernier cas faisant l'objet de la présente invention est confondu avec la courbe 20. Il s'agit du cas présenté sur la figure 3, pour lequel un seul jeu d'électrodes est mis en jeu avec inversion de la position du conducteur central au passage entre la région du cristal dite non inversée, et la région du cristal dite inversée. Le jeu d'électrodes est unique de longueur 2L, commandé par une tension pic à pic $V_o$ égale à la tension demi-onde $V\pi$. A 40 GHz, la perte en signal est de -6 dB. Par contre, le signal n'est pas affecté par la modulation de phase résiduelle associée (chirp) pour les mêmes raisons que le cas précédent.

**Revendications**

1. Modulateur optique comportant :

   - une structure en guide d'onde constituant un interféromètre à deux ondes formé dans un matériau électro-optique ferroélectrique et comportant deux bras (4', 4"),
   - deux jeux d'électrodes dont un premier ensemble d'électrodes (6) relié à une source électrique commandable (9) permettant l'application d'un champ électrique sur l'un au moins des bras (4', 4") de l'interféromètre, de manière à faire varier l'écart de phase entre des ondes lumineuses suivant respectivement l'un ou l'autre des bras (4', 4"), et un deuxième ensemble d'électrodes (16), l'un des ensembles d'électrodes (6, 16) étant placé dans une région présentant un domaine de polarisation non inversée du matériau électro-optique, l'autre dans une région inversée (15),

**caractérisé en ce que** :
- lesdits premier (6) et deuxième (16) ensembles d'électrodes sont placés respectivement sur chacun des bras (4', 4") de l'interféromètre, et
- une ligne à retard (17) est placée entre les électroniques de commande des ensembles d'électrodes introduisant un retard égal au temps de propagation de la lumière à travers la section de l'interféromètre à deux ondes recouverte par le premier ensemble d'électrodes (6).

2. Modulateur optique selon la revendication 1, **caractérisé en ce que** la source électrique commandable (9) comporte deux amplificateurs de commande (13, 13') à gain variable permettant le contrôle des tensions électriques, respectivement appliquées aux électrodes par rapport à la moitié de la tension demi-onde résultant d'un jeu unique d'électrodes, de façon à régler la modulation de phase résiduelle.

3. Modulateur optique selon la revendication 2, **caractérisé en ce que** la ligne à retard (17) est passive.

4. Modulateur optique selon la revendication 2, **caractérisé en ce que** la ligne à retard (17) est active.

5. Modulateur optique comportant :

   - une structure en guide d'onde constituant un interféromètre à deux ondes formé dans un matériau électro-optique ferroélectrique, et comportant deux bras (4', 4"),
   - deux jeux d'électrodes dont un premier ensemble d'électrodes relié à une source électrique commandable (9) permettant l'application d'un champ électrique sur l'un au moins des bras (4', 4") de l'interféromètre, de manière à faire varier l'écart de phase entre des ondes lumineuses suivant respectivement l'un ou l'autre des bras (4', 4"), et un deuxième ensemble d'électrodes, l'un des ensembles d'électrodes étant placé dans une région présentant un domaine de polarisation non inversée du matériau électro-optique, l'autre dans une région inversée (15),
   **caractérisé en ce que** :
   - lesdits premier et deuxième ensembles d'électrodes sont placés respectivement sur chacun des bras (4', 4") de l'interféromètre, et
   - lesdits premier et deuxième ensembles d'électrodes sont regroupés et constitués par deux électrodes parallèles (18) l'une à l'autre et comportant un nombre pair de sections (L1, L2) parallèles raccordées par un tronçon (19) en forme de S, chaque section traversant une région de polarité ferroélectrique de signe opposé à celle de la section adjacente.

6. Modulateur optique selon la revendication 5, **caractérisé en ce que** les premier (6) et deuxième (16) ensembles d'électrodes sont regroupés et constitués par deux électrodes parallèles l'une à l'autre et constituées chacune de deux sections raccordées par le tronçon (19) en forme de S.

7. Modulateur optique selon l'une quelconque des revendications 1 à 6, **caractérisé en ce que** le substrat (1) est un cristal anisotrope de niobate de lithium de coupe Z perpendiculaire à la surface.

8. Modulateur optique selon l'une quelconque des revendications 1 à 6, **caractérisé en ce que** le substrat (1) est un cristal anisotrope de tantalate de lithium de coupe Z perpendiculaire à la surface.

9. Modulateur optique selon l'une quelconque des revendications 1 à 8, **caractérisé en ce que** la structure en guide d'onde est réalisée par diffusion thermique de couches minces métalliques.

10. Modulateur optique selon l'une quelconque des revendications 1 à 8, **caractérisé en ce que** la structure en guide d'onde est réalisée par échange protonique.

11. Modulateur optique selon l'une quelconque des revendications 1 à 10, **caractérisé en ce que** les ensembles d'électrodes sont chacun refermés sur une impédance de charge.

12. Modulateur optique selon l'une quelconque des revendications 1 à 11, **caractérisé en ce que** la région inversée du matériau électro-optique est obtenue de manière permanente par l'application locale d'une impulsion de champ électrique.

13. Modulateur optique selon l'une quelconque des revendications 1 à 11, **caractérisé en ce que** la région inversée du matériau électro-optique est obtenue par bombardement électronique.

14. Modulateur optique selon l'une quelconque des revendications 12 ou 13, **caractérisé en ce que** la région inversée du matériau électro-optique couvre les deux bras (4', 4") de l'interféromètre sur une longueur au moins égale à celle de l'un des deux ensembles d'électrodes (6, 16) et couvre ces bras (4', 4") sur une largeur au moins égale à celle du champ lumineux.

15. Modulateur optique selon l'une quelconque des revendications 1 à 14, **caractérisé en ce que** l'interféromètre est un interféromètre de Mach-Zehnder.

16. Modulateur optique selon l'une quelconque des revendications 1 à 15, **caractérisé en ce que** chaque ensemble d'électrodes comporte un conducteur central (C) à faible perte centré respectivement sur chaque bras (4', 4") de l'interféromètre.

17. Modulateur optique selon la revendication 16, **caractérisé en ce que** chaque ensemble d'électrodes comporte deux plans de masse latéraux (M, M') symétriques disposés à une distance au moins égale à deux fois la largeur du conducteur central (C).

**Claims**

1. Optical modulator comprising:

   - a wave guide structure making a two-wave Interferometer made of a ferroelectric electro-optical material, and comprising two arms (4', 4"),
   - two sets of electrodes wherein a first set of electrodes (6) connected to a controllable electric power source (9) enabling the application of an electric field to one at least of the arms (4', 4") of the interferometer, in order to vary the phase spacing between luminous waves along respectively one arm (4', 4") or the other, and a second set of electrodes (16), one of the sets of electrodes (6, 16) being positioned In a non-reversed region of the electro-optical material presenting a polarization field, the other being positioned in a reversed region (15), **characterised in that** :
   - said first (6) and second (16) sets of electrodes are located respectively on each of the arms (4', 4") of the Interferometer, and
   - a delay line (17) is located between the electronics for controlling the sets of electrodes introducing a delay equal to the propagation time of light In the first set of electrodes (6).

2. An optical modulator according to claim 1, **characterised in that** the controllable electric power source (9) comprises two variable gain control amplifiers (13, 13') enabling to control electric voltages, respectively applied to the electrodes relative to half the semi-wave voltage resulting from a single set of electrodes, in order to adjust the residual phase modulation.

3. An optical modulator according to claim 2, **characterised in that** the delay line (17) is passive.

4. An optical modulator according to claim 2, **characterised in that** the delay line (17) is active.

5. Optical modulator comprising:

   - a wave guide structure making a two-wave interferometer made of a ferroelectric electro-optical material, and comprising two arms (4', 4").
   - two sets of electrodes wherein a first set of electrodes connected to a controllable electric power source (9) enabling the application of an electric field to one at least of the arms (4', 4") of the interferometer, In order to vary the phase spacing between luminous waves along respectively one arm (4', 4") or the other, and a second set of electrodes, one of the sets of electrodes being positioned In a non-reversed region of the electro-optical material presenting a polarization field, the other being positioned in a reversed region (15), **characterised in that :**
   - said first and second sets of electrodes are located respectively on each of the arms (4', 4") of the interferometer, and
   - said first and second sets of electrodes are grouped and composed of two electrodes (18) parallel to one another and comprising an even number of parallel sections (L1, L2) connected by an S-shaped length (19), each section going through a region whereof the sign of the ferroelectric polarity is the reverse of that of the adjacent section.

6. An optical modulator according to claim 5, **characterised in that** said first (6) and second (16) sets of electrodes are grouped and composed of two electrodes parallel to one another and composed each of two sections connected by the S-shaped length (19).

7. An optical modulator according to anyone of claims 1 to 6, **characterised in that** the substrate (1) is a Z-shaped lithium niobate anisotropic crystal perpendicular to the surface.

8. An optical modulator according to anyone of claims 1 to 6, **characterised in that** the substrate is a Z-shaped lithium tantalate anisotropic crystal perpendicular to the surface.

9. An optical modulator according to anyone of claims 1 to 8, **characterised in that** the wave guide structure takes place by thermal diffusion of thin metallic layers.

10. An optical modulator according to anyone of claims 1 to 8, **characterised in that** the wave guide structure takes place by proton exchange.

11. An optical modulator according to anyone of claims 1 to 10, **characterised in that** the sets of electrodes are each closed on a load impedance.

12. An optical modulator according to anyone of claims 1 to 11, **characterised in that** the reversed region of the electro-optical material is obtained permanently by local application of an electric field pulse.

13. An optical modulator according to anyone of claims 1 to 11, **characterised in that** the reversed region of the electro-optical material Is obtained by electron bombardment.

14. Optical modulator according to claim 12 or 13, **characterised in that** the reversed region of the electro-optical material covers both arms (4', 4") of the Interferometer over a length at least equal to that of one of the sets of electrodes (6, 16) and covers these arms (4', 4") over a width at least equal to that of the luminous field.

15. An optical modulator according to anyone of claims 1 to 14, **characterised in that** the interferometer is a Mach-Zehnder interferometer.

16. An optical modulator according to anyone of claims 1 to 15, **characterised in that** each set of electrodes comprises a low loss central conductor (C) centred respectively on each arm (4', 4") of the interferometer.

17. An optical modulator according to claim 16, **characterised in that** each set of electrodes comprises two symmetrical lateral ground planes (M, M') arranged at a distance at least equal to twice the width of the central conductor (C).

**Patentansprüche**

1. Optischer Modulator, umfassend:

   - eine Wellenleiteratruktur, die ein Zweiwelleninterferometer bildet, das aus einem ferroelektrischen, elektrooptischen Material geformt wird und zwei Arme (4', 4") umfasst,
   - zwei Elektrodensätze, zu denen eine erste Elektrodenanordnung (6), die mit einer steuerbaren Stromquelle (9) verbunden ist, die das Anlegen eines Stromfelds an mindestens einen der Arme (4', 4") des Interferometers ermöglicht, um den Phasenabstand zwischen Lichtwellen, die jeweils dem einen oder anderen der Arme (4', 4") folgen, zu verändern, und eine zweite Elektrodenanordnung (16) gehören, wobei eine der Elektrodenanordnungen (6, 16) in einem Bereich, der einen nicht umgekehrten Polarisationsbereich des elektrooptischen Materials aufweist, und die andere in einem umgekehrten Bereich (15) angeordnet ist,
   **dadurch gekennzeichnet, dass**:
   - die ersten (6) und zweiten (16) Elektrodenanordnungen jeweils auf jedem der Arme (4', 4") des interferometers angeordnet sind, und

- eine Verzögerungsleitung (17) zwischen den Steuerelektroniken der Elektrodenanordnungen angeordnet ist, die eine Verzögerung einführt, die gleich der Laufzeit des Lichts durch den Abschnitt des Zweiwelleninterferometers ist, der von der ersten Elektrodenanordnung (6) abgedeckt wird.

2. Optischer Modulator nach Anspruch 1, **dadurch gekennzeichnet, dass** die steuerbare Stromquelle (9) zwei Steuerverstärker (13, 13') mit variabler Verstärkung umfasst, welche die Regelung der elektrischen Spannungen, die jeweils an den Elektroden angelegt werden, im Verhältnis zur Hälfte der Halbwellenspannung, die sich aus einem einzelnen Elektrodensatz ergibt, ermöglichen, um die restliche Phasenmodulation zu regulieren.

3. Optischer Modulator nach Anspruch 2, **dadurch gekennzeichnet, dass** die Verzögerungsleitung (17) passiv ist.

4. Optischer Modulator nach Anspruch 2, **dadurch gekennzeichnet, dass** die Verzögerungsleitung (17) aktiv ist.

5. Optischer Modulator umfassend:

- eine Wellenleiterstruktur, die ein Zweiwelleninterferometer bildet, das aus einem ferroelektrischen, elektrooptischen Material geformt wird und zwei Arme (4', 4") umfasst,
- zwei Elektrodensätze, zu denen eine erste Elektrodenanordnung, die mit einer steuerbaren Stromquelle (9) verbunden ist, die das Anlegen eines Stromfelds an mindestens einen der Arme (4', 4") des Interferometers ermöglicht, um den Phasenabstand zwischen Lichtwellen, die jeweils dem einen oder anderen der Arme (4', 4") folgen, zu verändern, und eine zweite Elektrodenanordnung gehören, wobei eine der Elektrodenanordnungen in einem Bereich, der einen nicht umgekehrten Polarisationsbereich des elektrooptischen Materials aufweist, und die andere in einem umgekehrten Bereich (15) angeordnet ist,
**dadurch gekennzeichnet, dass**:
- die ersten und zweiten Elektrodenanordnungen jeweils auf jedem der Arme (4', 4") des Interferometers angeordnet, sind, und
- die ersten und zweiten Elektrodenanordnungen zusammengefasst sind und aus zwei Elektroden (18) bestehen, die zueinander parallel sind und eine gerade Anzahl von parallelen Abschnitten (L1, L2) umfassen, die durch ein S-förmiges Teilstück (19) verbunden werden, wobei jeder Abschnitt durch einen ferroelektrischen Polaritätsbereich geht, dessen Vorzeichen dem des angrenzenden Abschnitts entgegengesetzt ist.

6. Optischer Modulator nach Anspruch 5, **dadurch gekennzeichnet, dass** die ersten (6) und zweiten (16) Elektrodenanordnungen zusammengefasst sind und aus zwei Elektroden bestehen, die zueinander parallel sind und jeweils aus zwei Abschnitten bestehen, die durch ein S-förmiges Teilstück (19) verbunden werden.

7. Optischer Modulator nach einem der Ansprüche 1 bis 6, **dadurch gekennzeichnet, dass** das Substrat (1) ein anisotroper Lithiumniobat-Kristall mit einem zur Oberfläche rechtwinkligen Z-Schnitt ist.

8. Optischer Modulator nach einem der Ansprüche 1 bis 6, **dadurch gekennzeichnet, dass** das Substrat (1) ein anisotroper Lithiumtantalat-Kristall mit einem zur Oberfläche rechtwinkligen Z-Schnitt ist.

9. Optischer Modulator nach einem der Ansprüche 1 bis 8, **dadurch gekennzeichnet, dass** die Wellenleiterstruktur durch thermische Diffusion von Metalldünnschichten ausgebildet wird.

10. Optischer Modulator nach einem der Ansprüche 1 bis 8, **dadurch gekennzeichnet, dass** die Wellenleiterstruktur durch Protonenaustausch ausgebildet wird.

11. Optischer Modulator nach einem der Ansprüche 1 bis 10, **dadurch gekennzeichnet, dass** die Elektrodenanordnungen jeweils auf eine Lastimpedanz sind.

12. Optischer Modulator nach einem der Ansprüche 1 bis 11, **dadurch gekennzeichnet, dass** der umgekehrte Bereich des elektrooptischen Materials dauerhaft durch lokales Anlegen eines Stromfeldimpulses erzielt wird.

13. Optischer Modulator nach einem der Ansprüche 1 bis 11, **dadurch gekennzeichnet, dass** der umgekehrte Bereich des elektrooptischen Materials durch Elektronenbeschuss erzielt wird.

14. Optischer Modulator nach einem der Ansprüche 12 oder 13, **dadurch gekennzeichnet, dass** der umgekehrte Bereich des elektrooptischen Materials die beiden Arme (4', 4") des Interferometers auf einer Länge abdeckt, die mindestens gleich derjenigen einer der beiden Elektrodenanordnungen (6, 16) ist, und diese Arme (4', 4") über eine Breite abdeckt, die mindestens gleich derjenigen des Lichtfelds ist.

15. Optischer Modulator nach einem der Ansprüche 1 bis 14, **dadurch gekennzeichnet, dass** das Interferometer ein Mach-Zehnder-Interferometer ist.

16. Optischer Modulator nach einem der Anspruche 1 bis 15, **dadurch gekennzeichnet, dass** jede Elektrodenenordnung einen verlustrarmen mittleren Leiter (C) in umfasst, der jeweils auf jedem Arm (4', 4") des Interferometers zentriert ist.

17. Optischer Modulator nach Anspruch 16, **dadurch gekennzeichnet, dass** jede Elektrodenanordnung zwei symmetrische seitliche Massebenen (M, M') umfasst, die in einem Abstand abgeordnet, sind der mindestens gleich der doppelten Breite des mittleren Leiters (C) ist.

1A (Art Antérieur)

1B

1C (Art Antérieur)

1D

1E (Art Antérieur)

1F

FIG. 1

FIG. 2A (C₁)

FIG. 2B (C₂)

FIG. 2

FIG. 3

(dB)

(GHz)

FIG. 4

**15**

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SAMSON S. et al.** Electro-optic measurements using a Mach-Zehnder interferometer with domains reversals. *PHOTONICS COMPONENT ENGINEERING AND APPLICATIONS,* 08 Avril 1996, vol. 2749, 186-194